# EUROPEAN PATENT APPLICATION

(11) **EP 3 721 731 A1**
(43) Date of publication of application: **14.10.2020**
(21) Application number: 19169060.1
(22) Date of filing: 12.04.2019
(51) Int. Cl.: A24F 47/00, H02J 7/00

(54) **CHARGER FOR SMOKING SUBSTITUTE APPARATUS**

(71) Applicant: NERUDIA LIMITED, Liverpool Merseyside L24 9HP (GB)
(72) Inventor: ILLIDGE, Benjamin, Speke Liverpool L24 9HP (GB); SUDLOW, Thomas, Speke Liverpool L24 9HP (GB)
(74) Representative: Mewburn Ellis LLP

(57) **Abstract**

Various embodiments provide a charger for a smoking substitute system, the charger comprising: a base having a first holder for receiving a main body of the smoking substitute system, and one or more second holders, each of the one or more second holders being arranged to receive a respective consumable for the smoking substitute system; and a charging assembly for charging the main body, the charging assembly including a connection interface and arranged for connection to the main body when the main body is received in the first holder. Some other embodiments provide a smoking substitute kit comprising a charger and a smoking substitute system.

## Description

### Field of the Invention

The present invention relates to a charger for a smoking substitute apparatus and, in particular, a charger capable of storing a consumable of the smoking substitute apparatus.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute systems in order to avoid the smoking of tobacco.

Such smoking substitute systems can form part of nicotine replacement therapies aimed at people who wish to stop smoking and overcome a dependence on nicotine.

Smoking substitute systems include electronic systems that permit a user to simulate the act of smoking by producing an aerosol (also referred to as a "vapour") that is drawn into the lungs through the mouth (inhaled) and then exhaled. The inhaled aerosol typically bears nicotine and/or a flavourant without, or with fewer of, the odour and health risks associated with traditional smoking.

In general, smoking substitute systems are intended to provide a substitute for the rituals of smoking, whilst providing the user with a similar experience and satisfaction to those experienced with traditional smoking and with combustible tobacco products.

The popularity and use of smoking substitute systems has grown rapidly in the past few years. Although originally marketed as an aid to assist habitual smokers wishing to quit tobacco smoking, consumers are increasingly viewing smoking substitute systems as desirable lifestyle accessories. There are a number of different categories of smoking substitute systems, each utilising a different smoking substitute approach.

One approach is the so-called "vaping" approach, in which a vaporisable liquid, typically referred to (and referred to herein) as "e-liquid", is heated by a heating device (referred to herein as an electronic cigarette or "e-cigarette" device) to produce an aerosol vapour which is inhaled by a user. The e-liquid typically includes a base liquid as well as nicotine and/or a flavourant. The resulting vapour therefore also typically contains nicotine and/or a flavourant. The base liquid may include propylene glycol and/or vegetable glycerine.

A typical e-cigarette device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

E-cigarettes can be configured in a variety of ways. For example, there are "closed system" vaping smoking substitute systems, which typically have a sealed tank and heating element. The tank is prefilled with e-liquid and is not intended to be refilled by an end user. One subset of closed system vaping smoking substitute systems include a main body which includes the power source, wherein the main body is configured to be physically and electrically coupled to a consumable including the tank and the heating element. In this way, when the tank of a consumable has been emptied, that consumable is disposed of. The main body can be reused by connecting it to a new, replacement, consumable. Another subset of closed system vaping smoking substitute systems are completely disposable, and intended for one-use only.

There are also "open system" vaping smoking substitute systems which typically have a tank that is configured to be refilled by a user. In this way the entire device can be used multiple times.

An example vaping smoking substitute system is the myblu™ e-cigarette. The myblu™ e-cigarette is a closed system which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heater, which for this device is a heating filament coiled around a portion of a wick. The wick is partially immersed in the e-liquid, and conveys e-liquid from the tank to the heating filament. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

The rechargeable battery may typically be recharged by plugging the main body into an external power source e.g. via a charger cable. Thus, the main body may include a connector for plugging the charger cable into the main body.

The present disclosure has been devised in the light of the above considerations.

### Summary of the Invention

At its most general, the present invention relates to a charger for a smoking substitute apparatus which is arranged to hold a main body of the smoking substitute apparatus while charging the main body. Additionally, the charger is arranged to hold one or more consumables for the smoking substitute system. In this manner, the charger of the present invention may provide a solution for conveniently charging a smoking substitute system and storing it together with its consumables. Indeed, as the charger serves the dual functions of charging the main body and storing consumables, all of the components of the smoking substitute system may be kept ready for use at a single location, i.e. in the charger. Thus, for example, a user may place the charger on their desk to store and charge the smoking substitute system, so that it may be easily accessible without creating undue clutter. Moreover, the charger may prevent the main body from being knocked over and/or damaged during charging, and it may reduce the risk of the main body being disconnected from the charger during charging. This may serve to ensure that the main body is properly charged, so that when a user retrieves the main body from the charger, it is ready for use.

According to a first aspect of the invention, there is provided a charger for a smoking substitute system, the charger comprising: a base having a first holder for receiving a main body of the smoking substitute system, and one or more second holders, each of the one or more second holders being arranged (e.g. sized and shaped) to receive a respective consumable for the smoking substitute system; and a charging assembly (or charging module) for charging the main body, the charging assembly including a connection interface arranged (e.g. positioned) for connection to the main body when the main body is received in the first holder.

In this manner, when the main body of the smoking substitute system is received in the first holder, it may be connected to the charging assembly via the connection interface, so that a battery in the main body may be recharged by the charging assembly.

Moreover, the first holder may be arranged to hold the main body in an upright position, such that the main body may be in an upright position whilst being charged by the charging assembly. Holding the main body in an upright position during charging may also make it easier for a user to grab the main body to remove it from the charger, as well as making it easier to connect the main body to the charger.

The one or more second holders may be located adjacent to the first holder, so that consumables for the smoking substitute system may be stored in close proximity to the main body, e.g. for ease of access.

The base of the charger may be arranged to support the charger on a surface. In this manner, the base may serve to maintain the charger in an upright position when it is placed on a flat surface. The base may serve to ensure that the charger is stable, and prevent it from being knocked over. For example, the base may include a support including a set of feet and/or a support surface arranged support the charger on a surface. The base may include one or more anti-slip elements (e.g. anti-slip pads), to prevent the base from slipping when it is placed on a surface. This may prevent the base from moving or slipping when a main body and/or consumables of a smoking substitute system are inserted to and/or removed from the charger.

The base may be arranged to house part (or all) of the charging assembly. For example, the base may include an outer housing in which the charging assembly is housed. In this manner, the charger may be provided as a single, self-contained device, which may facilitate use of the charger and reduce an amount of space taken up by the charger. The base may also serve to protect the charging assembly, to prevent it from being damaged.

Alternatively, part of the charging assembly may be disposed outside of the base. In this case, the connection interface in the first holder may be connected to the rest of the charging assembly via a cable that extends from the base.

The first holder may be arranged to receive an end portion of a main body of the smoking substitute system, e.g. in an upright position. Thus, when the end portion of the main body is inserted into the first holder, the main body may be held by the first holder. This may ensure that the main body is securely held in place whilst it is charging, to prevent it from being knocked out of the charger. The connection interface may be disposed in the first holder, and arranged for connection to the main body when the end portion of the main body is received in the first holder. This may facilitate connection of the main body of the smoking substitute system to the connection interface. For example, the connection interface may be positioned in a base (e.g. bottom) of the first holder to facilitate engagement with a cooperating connection interface positioned on an end of the main body.

The first holder may have a shape that is complementary to a shape of the end portion of the main body. A shape of the first holder may for example substantially match a cross-sectional shape of the end portion of the main body of the smoking substitute system. For example, the first holder may be arranged to form an interference fit with the end portion of the main body. This may ensure that the end portion of the main body is securely held in the first holder. This may also ensure that only devices that are intended for use with the charger may be inserted into the first holder, to prevent misuse of the charger. This may also serve to avoid a user putting their finger into the first holder, where it may come into contact with the connection interface.

Herein, an upright position of the main body may refer to a longitudinal axis of the main body being substantially vertical. However, it is also contemplated that the upright position of the main body may correspond to a position where the longitudinal axis is tilted relative to a vertical direction. A benefit of holding the main body in an upright position is that a user may easily grab the main body to remove it from the charger. This may also facilitate connecting the main body to the charger, as a user may insert the end portion of the main body into the first holder along a substantially vertical direction (i.e. along a direction aligned with a longitudinal axis of the main body when the main body is held in the upright position).

The one or more second holders are each arranged to receive a respective consumable for the smoking substitute system. Thus, an individual consumable may be held in each of the one or more second holders. This may facilitate storing of consumables for the smoking substitute system, as well as make them easily accessible to the user. Each of the one or more second holders may be shaped to receive an individual consumable.

Each of the one or more second holders may be disposed on an outside of the base. In this manner, consumables stored in the one or more second holders may be easily visible and accessible to the user.

Each of the one or more second holders may have a shape that is complementary to a consumable for the smoking substitute system, so that the consumable may be securely held in place in the second holder. For example, each of the one or more second holders may have a shape that substantially matches a cross-sectional shape of the respective consumable. This may prevent a consumable from being knocked out of the charger, which could result in damage to the consumable and or leakage of e-liquid from the consumable. This may also ensure that only consumables that are intended for use with the smoking substitute system can be stored in the second holders. This may avoid the user storing an incorrect type of consumable in the charger. The consumable may be engageable with the main body to form a complete smoking substitute system. For example, a consumable for the smoking substitute system may include a cartridge that is engageable with the main body.

The charging assembly may be configured to charge a main body of a smoking substitute system (e.g. a rechargeable battery in the main body) that is received in the first holder and connected to the connection interface. For example, the charging assembly may be connectable to an external power source to convey power from the external power source to a main body connected to the connection interface. Alternatively, the charging assembly may include an internal power source, such that the charging assembly is arranged to deliver power from the internal power source to a main body connected to the connection interface. For example, the charging assembly may include a battery, e.g. a rechargeable battery. Where the charging assembly includes a rechargeable battery, the charging assembly may be connectable to an external power source to charge the rechargeable battery in the charging assembly. Using a charger with an internal power source may enable a main body to be charged without having to connect the charger to an external power source. This may avoid the charger accidentally be knocked over or unplugged, and may therefore be more convenient to use.

The connection interface may be arranged to connect to a corresponding connector on the end portion of the main body of the smoking substitute system, to form an electrical connection between the charging assembly and the main body. For example, the connection interface may include a plug that is arranged to engage a corresponding socket on the end portion of the main body (or vice versa) when the end portion of the main body is received in the first holder. The connection interface is disposed in the first holder. In this manner, when the main body is inserted into the first holder, the connection interface may engage the connector on the main body to form an electrical connection. Providing the connection interface in the first holder may further serve to protect the connection interface, and avoid its coming into contact with a user.

The connection interface may be oriented along a longitudinal axis of the main body when the main body is held in the upright position. This may facilitate connection of the main body to the connection interface, as the main body may be inserted along its longitudinal axis into the first holder to connect it to the connection interface.

Each of the one or more second holders may be arranged to hold the respective consumable in an upright position. Holding a consumable in an upright position may prevent e-liquid from leaking out of the consumable. Holding a consumable in an upright position may also facilitate inserting the consumable into, and removing the consumable from, the second holder. For example, a second holder may be arranged to receive an end portion of the consumable and hold the consumable in the upright position. The upright position of the consumable may correspond to a position where a longitudinal axis of the consumable is substantially aligned with a vertical direction. In the upright position, a mouthpiece of the consumable may be disposed above an engagement portion of the consumable, the engagement portion of the consumable being a portion of the consumable that is configured for engagement with the main body of the smoking substitute system.

A shape of the second holder may be complementary to the end portion of the consumable. For example, the second holder may be arranged to form an interference fit with the end portion of the consumable. This may ensure that the end portion of the consumable is securely held in the second holder, e.g. to prevent the consumable from being knocked out of the second holder.

The first holder may be formed as a recess in the base. For example, the recess may be formed in an outer housing of the base. In this manner, the first holder may be integrally formed as part of the outer housing of the base, which may facilitate construction of the base. For example, the outer housing may be formed as a single piece of moulded or 3D-printed plastic.

Similarly, each of the one or more second holders may be formed as respective recess in the base. Thus, the one or more second holders may be formed as recesses in the outer housing, such that the one or more second holders may be integrally formed as part of the outer housing of the base.

The charger may further include a cable for connecting the charging assembly to an external power source. In this manner, power from the external power source may be delivered to the charging assembly to charge a main body that is connected to the connection interface. In some cases, the cable may be removably connectable from the charging assembly, so that it may be disconnected from the charger when not in use. For example, the charging interface may include a plug or socket for connecting to the cable. Where the charging assembly includes a rechargeable battery, power from the external power source may be used to recharge the rechargeable battery in the charging assembly.

The cable may be a USB cable. In this manner, the charger may be plugged into a USB port (e.g. on a computer). This may facilitate use of the charger, e.g. as a user may plug it into their laptop or desktop computer. In this manner, a lengthy cable for connecting the charger to mains power may be avoided.

A portion of the cable may be covered by the base. In this manner, the base may serve to protect the cable, to prevent the cable from being damaged. For example, where the base includes an outer housing and the charging assembly is disposed within the outer housing, a proximal portion of the cable may be disposed within the outer housing and connected to the charging assembly. A distal portion of the cable, which may include a connector for connecting the cable to the external power source, may extend beyond the outer housing. Thus, the outer housing may serve to protect a connection between the cable and the charging assembly, e.g. to prevent the cable from being disconnected from the charging assembly. The outer housing may include an aperture through which the cable passes.

The connection interface may be a USB interface, for example a USB-C interface. In this manner, a main body having a corresponding USB connector may be charged by the charger. A USB-C interface does not have different "up" and "down" orientations, which may facilitate connecting the main body to the connection interface, as a user may connect the main body to the USB-C interface in either of the two possible orientations.

The charger may further include a charge indicator for indicating a charging status of a main body received in the first holder. In this manner, a user may be informed of the charging status of the main body. Herein, a charging status may be an indication that a main body received in the first holder is being charged, or that it is fully charged. For example, the charge indicator may be an indicator light which is arranged to indicate the charging status. The charging status may be indicated via a blinking pattern of the indicator light (e.g. blinking means charging, no blinking means fully charged), or via a colour of the indicator light (e.g. red means charging, blue means fully charged). Other types of charge indicator are also contemplated, such as a display or the like.

In some embodiments, the base may include multiple first holders, each of the multiple first holders arranged to receive a respective main body of a smoking substitute system. Each of the first holders may include a connection interface disposed therein as part of the charging assembly, the connection interface being arranged for connection to the main body when the end portion of the main body is received in that first holder. In this manner, the charger may be used to charge multiple main bodies at once, i.e. one in each of the multiple first holders. Each of the multiple first holders may be configured in a similar manner to the first holder described above. Similarly, each of the connection interfaces may be configured in a similar manner to the connection interface described above.

According to a second aspect of the invention, there is provided a smoking substitute kit including: a charger according to the first aspect of the invention; and a smoking substitute system comprising a main body and a consumable, the consumable being engageable with the main body; wherein the first holder is arranged to receive the main body such that, when the main body is received in the first holder it is connected to the connection interface for charging; and wherein the consumable is receivable in each of the one or more second holders. The charger may include any of the features discussed above in relation to the first aspect of the invention.

Thus, as discussed above, when the main body is received in the first holder of the charger's base, the main body may be connected to the connection interface so that it may be charged by the charging assembly. The consumable may be stored in one of the one or more second holders. The charger may have any of the features described above in relation to the first aspect of the invention.

The kit may include a same number of consumables as the charger has second holders. In this manner, each consumable may be received in a respective one of the one or more second holders.

The first holder may be arranged to hold the main body of the smoking substitute system in an upright position.

The first holder may be arranged to receive an end portion of the main body of the smoking substitute device.

The connection interface may be disposed in the first holder, and arranged for connection to the main body when the end portion of the main body is received in the first holder.

A shape of the first holder may substantially match a cross-sectional shape of the end portion of the main body of the smoking substitute system.

The main body may have an engagement end which is engageable with the consumable, the engagement end being on an opposite end of the main body relative to the end portion. The end portion of the main body may include a connector which is arranged to engage the connection interface when the end portion is received in the first holder.

The first holder may have a shape that is complementary to a shape of the end portion of the main body, e.g. so that an interference fit may be formed between the first holder and the end portion of the main body when the end portion is received in the first holder.

Each of the one or more second holders may have a shape that is complementary to a shape of the consumable, e.g. so that an interference fit may be formed between a second holder and the consumable when the consumable is received in the second holder.

Each of the one or more second holders may be arranged to hold the consumable in an upright position when the consumable is received therein. In this manner, each of the one or more second holders may hold a respective consumable in an upright position.

The connection interface may be arranged to engage a connector on the end portion of the main body when the end portion is received in the first holder. As an example, where the connection interface is a USB interface (for example a USB-C interface), the end portion of the main body may include a corresponding USB connector arranged to engage the USB interface in the charger when the end portion is received in the first holder.

The consumable is configured for engagement with the main body (e.g. so as to form a closed smoking substitute system). The consumable may also be referred to as a "cartridge" or "pod" for the smoking substitute system. For example, the consumable may comprise components of the system that are disposable, and the main body may comprise non-disposable or non-consumable components (e.g. power supply, controller, sensor, etc.) that facilitate the delivery of aerosol by the consumable. In such an embodiment, an aerosol former (e.g. e-liquid) may be replenished by replacing a used consumable with an unused consumable.

Alternatively, the consumable may be reusable. In such embodiments an aerosol former (e.g. e-liquid) of the consumable may be replenished by re-filling e.g. a reservoir of the consumable with the aerosol former (rather than replacing a consumable component of the apparatus).

In light of this, it should be appreciated that some of the features described herein as being part of the consumable may alternatively form part of a main body.

The main body and the consumable may be configured to be physically coupled together. For example, the consumable may be at least partially received in a recess of the main body, such that there is an interference fit between the main body and the consumable. Alternatively, the main body and the consumable may be physically coupled together by screwing one onto the other, or through a bayonet fitti ng .

Thus, the consumable and main body may comprise one or more engagement portions for engagement with one another. In this way, one end of the consumable may be coupled with the main body, whilst an opposing end of the consumable may define a mouthpiece of the smoking substitute system.

The smoking consumable may comprise a reservoir configured to store an aerosol former, such as an e-liquid. The e-liquid may, for example, comprise a base liquid and e.g. nicotine. The base liquid may include propylene glycol and/or vegetable glycerine. The e-liquid may also contain a flavourant, to provide a flavour to the user.

The reservoir may be in the form of a tank. At least a portion of the tank may be translucent. For example, the tank may comprise a window to allow a user to visually assess the quantity of e-liquid in the tank. A housing of the smoking substitute apparatus may comprise a corresponding aperture (or slot) or window that may be aligned with a translucent portion (e.g. window) of the tank. The reservoir may be referred to as a "clearomizer" if it includes a window, or a "cartomizer" if it does not.

The consumable may comprise a passage for fluid flow therethrough. The passage may extend through (at least a portion of) the consumable, between openings that may define an inlet and an outlet of the passage. The outlet may be at a mouthpiece of the consumable. In this respect, a user may draw fluid (e.g. air) into and through the passage by inhaling at the outlet (i.e. using the mouthpiece). The passage may be at least partially defined by the tank. The tank may substantially (or fully) define the passage. In this respect, the tank may surround the passage.

The consumable may comprise an aerosol-generator. The aerosol generator may comprise a wick. The aerosol generator may further comprise a heater. The wick may comprise a porous material. A portion of the wick may be exposed to fluid flow in the passage. The wick may also comprise one or more portions in contact with liquid stored in the reservoir. For example, opposing ends of the wick may protrude into the reservoir and a central portion (between the ends) may extend across the passage so as to be exposed to fluid flow in the passage. Thus, fluid may be drawn (e.g. by capillary action) along the wick, from the reservoir to the exposed portion of the wick.

The heater may comprise a heating element, which may be in the form of a filament wound about the wick (e.g. the filament may extend helically about the wick). The filament may be wound about the exposed portion of the wick. The heating element may be electrically connected (or connectable) to a power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in fluid flowing through the passage. This vapour may subsequently cool to form an aerosol in the passage.

The main body may comprise a power source. The power source may be electrically connected (or connectable) to a heater of the smoking substitute apparatus (e.g. when engaged with the main body). The power source may be a battery (e.g. a rechargeable battery). A connector (e.g. in the form of a USB connector) may be provided on the end portion of the main body for recharging this battery via engagement with the connection interface in the first holder.

The consumable may comprise an electrical interface for interfacing with a corresponding electrical interface of the main body. One or both of the electrical interfaces may include one or more electrical contacts. Thus, when the main body is engaged with the consumable, the electrical interface may be configured to transfer electrical power from the power source to a heater of the consumable.

The electrical interface may also be used to identify the consumable from a list of known types. For example, the consumable may have a certain concentration of nicotine and the electrical interface may be used to identify this. The electrical interface may additionally or alternatively be used to identify when a consumable is connected to the main body.

The main body may comprise an interface, which may, for example, be in the form of an RFID reader, a barcode or QR code reader. This interface may be able to identify a characteristic (e.g. a type) of a consumable engaged with the main body. In this respect, the consumable may include any one or more of an RFID chip, a barcode or QR code, or memory within which is an identifier and which can be interrogated via the interface.

The main body may comprise a controller, which may include a microprocessor. The controller may be configured to control the supply of power from the power source to the heater of the smoking substitute apparatus (e.g. via the electrical contacts). A memory may be provided and may be operatively connected to the controller. The memory may include non-volatile memory. The memory may include instructions which, when implemented, cause the controller to perform certain tasks or steps of a method.

The main body may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

A puff sensor may be provided that is configured to detect a puff (i.e. inhalation from a user). The puff sensor may be operatively connected to the controller so as to be able to provide a signal to the controller that is indicative of a puff state (i.e. puffing or not puffing). The puff sensor may, for example, be in the form of a pressure sensor or an acoustic sensor. That is, the controller may control power supply to the heater of the consumable in response to a puff detection by the sensor. The control may be in the form of activation of the heater in response to a detected puff. That is, the smoking substitute system may be configured to be activated when a puff is detected by the puff sensor. The puff sensor may form part of the consumable or the main body.

The invention includes the combination of the aspects and preferred features described except where such a combination is clearly impermissible or expressly avoided.

### Summary of the Figures

So that the invention may be understood, and so that further aspects and features thereof may be appreciated, embodiments illustrating the principles of the invention will now be discussed in further detail with reference to the accompanying figures, in which:
Figure 1 is a cross-sectional diagram of a charger according to an embodiment of the invention;
Figure 2 is a perspective view of a smoking substitute kit according to an embodiment of the invention;
Figure 3A is a schematic side view of a smoking substitute system that may be used with a charger according to an embodiment of the invention, where the smoking substitute system is in an engaged position;
Figure 3B is a schematic side view of the smoking substitute system of Figure 3A, where the smoking substitute system is in a disengaged position; and
Figure 3C is a cross-sectional diagram of a consumable of the smoking substitute system of Figure 3A.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

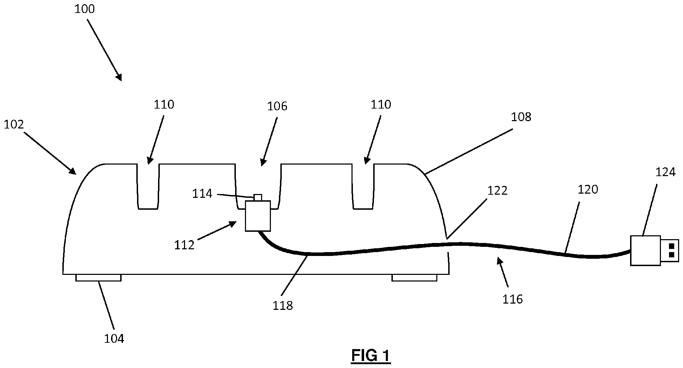

Figure 1 is a cross-sectional diagram of a charger 100 according to an embodiment of the invention. The charger 100 includes a base 102 which is arranged to rest on a surface. The base 102 includes a set of anti-slip feet 104 to prevent the base 102 from slipping. The base 102 includes a first holder 106 which is formed as a recess in an outer housing 108 of the base 102. The base 102 further includes a pair of second holders 110, each of which is formed as a respective recess in the outer housing 108 of the base 102. The outer housing 108 of the base 102 may be formed, for example, as a single component. In this manner, the recesses forming the first holder 106 and the second holders 110 can be integrally formed as part of the outer housing 108. For example, the outer housing 108 may be a plastic component made via a moulding or 3D-printing technique.

The first holder 106 is shaped to receive an end portion of a main body of a smoking substitute system (e.g. main body 301 discussed below), and hold the main body in an upright position. In particular, the first holder 106 has a shape that it is complementary to a shape of the end portion of the main body. Moreover, a cross-sectional shape of the first holder 106 substantially matches a cross-sectional shape of the main body. In this manner, the end portion of the main body may form an interference fit with the first holder 106, so that the first holder 106 may securely maintain the main body in the upright position.

The charger 100 further includes a charging assembly 112 located in the base 102 and which is configured to charge a main body of a smoking substitute system that is received in the first holder 106. The charging assembly 112 includes a connection interface 114 disposed in the first holder 106, and arranged to engage a corresponding connector on the end portion of the main body when the end portion of the main body is received in the first holder 106. The connection interface 114 may, for example, be a USB-C interface, arranged to engage a corresponding USB-C connector on the end portion of the main body. The connection interface 114 is located on a bottom face of the first holder 106, so as to be positioned to engage a connector which is located on an end face of the end portion of the main body. This may facilitate connecting the main body to the connection interface 114.

The charger 100 includes a cable 116 which serves to connect the charging assembly 112 to an external power source (not shown). The cable 116 is electrically connected to the charging assembly 112 inside the outer housing 108 of the base 102. Thus, a proximal portion 118 of the cable 116 is disposed inside the outer housing 108, and a distal portion 120 of the cable 116 extends outside the outer housing 108, via an aperture 122 in the outer housing 108. In this manner, the proximal portion 118 of the cable 116, as well as the connection between the cable 116 and the charging assembly 112 is protected by the outer housing 108. The distal portion 120 of the cable 120 includes a USB connector 124 for connecting the cable 116 to an external power source, e.g. to a USB port on a computer. Although in the present example the cable is shown as having a USB connector, other types of connectors may also be used, depending upon the type of power source used.

In this manner, the USB connector 124 may be plugged into an external power source to provide power to the charging assembly, so that a main body of a smoking substitute system received in the first holder 106 may be charged (via its connection with the connection interface 114). In other words, the connection interface 114 is arranged to deliver power received via the cable 116 to a main body received in the first holder 106, in order to charge the main body. Thus, a main body received in the first holder 106 may be charged whilst being securely held in the upright position.

In the example shown, the cable 116 is not removably connected to the charging assembly 112, e.g. it is "hardwired" to the charging assembly 112. However, in other embodiments, the proximal portion 118 of the cable 116 may include a connector (e.g. a USB, micro-USB, or USB-C connector) for removably connecting it to the charging assembly 112. In this manner, the cable 116 may be disconnected from the charging assembly 112 when the charger 100 is not in use.

In the example shown, power from an external power source may be delivered directly to a main body received in the first holder 106 via the cable 116 and the connection interface 114, e.g. the charging assembly may simply serve to electrically connect the cable 116 to the connection interface 114. However, in other examples, the charging assembly 112 may include electrical components which are arranged to convert a voltage and/or current provided to the connection interface to a desired level, to ensure that a desired power level may be delivered to a main body connected to the connection interface 114. In other embodiments (not shown), the charging assembly may include an internal power source such as a battery. Then, the battery may be electrically connected to the connection interface 114, so that the battery may be used to charge a main body received in the first holder 106. If the battery is rechargeable, a cable (e.g. cable 116) may be used to connect the charging assembly 112 to an external power source to charge the rechargeable battery.

Each of the second holders 110 is shaped to receive an individual consumable (e.g. consumable 303 discussed below), and hold the consumable in an upright position. In particular, each of the second holders 110 has a shape that is complementary to a shape of an end portion of the consumable. Moreover, a cross-sectional shape of each second holder 106 substantially matches a cross-sectional shape of the consumable. In this manner, the end portion of the consumable may form an interference fit with the second holder 110, so that the second holder 110 may securely maintain the consumable in the upright position.

The second holders 110 are located adjacent to the first holder 106. In this manner, a user may easily access consumables stored in the charger 100. In the example shown, there are two second holders 110. However, in other examples, there may be more or fewer second holders 110.

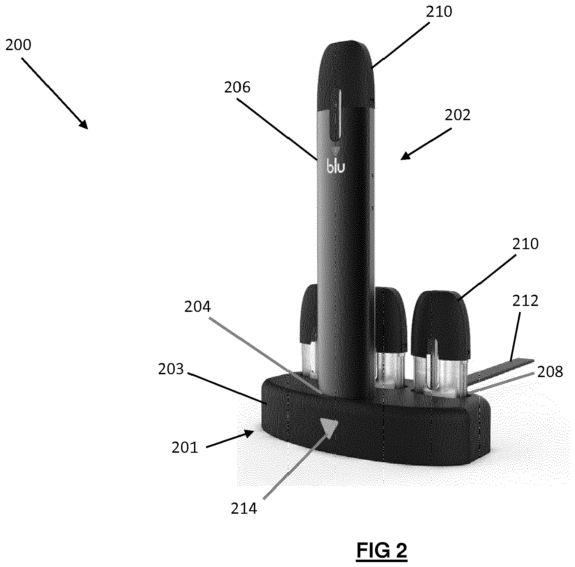

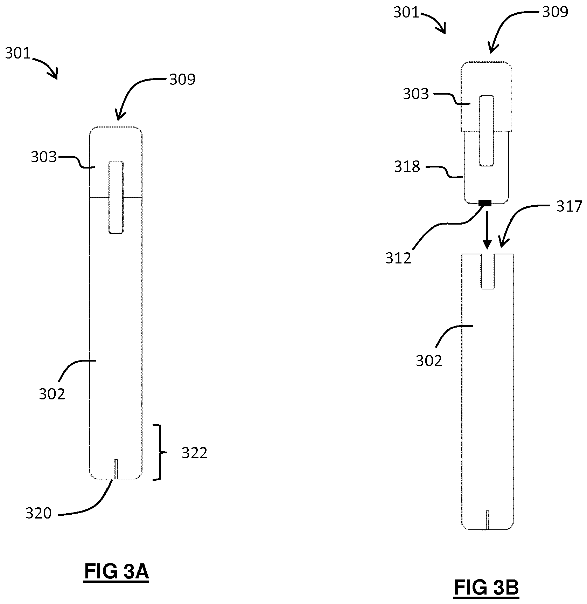

Figure 2 shows a perspective view of a smoking substitute kit 200 that is an embodiment of the invention. The kit 200 includes a charger 201 and a smoking substitute system 202. The smoking substitute system 202 includes a main body 206 which includes a rechargeable battery, and a set of consumables 210, each of which is individually engageable with the main body 206. A smoking substitute system similar to system 202 is described in more detail below in relation to Figures 3A-3C.

The charger 201 is similar in configuration to charger 100 described above. The charger 201 includes a base 203 having a first holder 204 for receiving an end portion of the main body 206 of the smoking substitute system 202, and holding the main body 206 in an upright position. The base 203 further includes three second holders 208, each one arranged to hold an individual consumable 210 of the smoking substitute system 202 in an upright position.

A charging assembly (not shown), similar to charging assembly 112 discussed above is disposed within the base 203 and arranged to charge the main body 206 when the end portion of the main body 206 is received in the first holder 204. In particular, the charging assembly includes a USB-C interface disposed within the first holder 204, and arranged to engage a corresponding USB-C connector on the end portion of the main body 206. Similarly to charger 100, the charger 201 includes a cable 212 for connecting the charging assembly to an external power source, in order to deliver power to the charging assembly.

The charger 201 also includes a charge indicator in the form of an indicator light 214 on a side of the base 203. The indicator light 214 serves to indicate a charging status of the main body 206 when it is plugged into the charger 201, i.e. whether the main body 206 is charging or whether it is charged. The indicator light 214 may be arranged to indicate the charging status in various manners, e.g. via a colour of the indicator light 214 and/or via a blinking pattern of the indicator light 214.

In the example shown in Figure 2, the end portion of the main body 206 is received in the first holder 204, such that the main body 206 is held in the upright position by the first holder 204. The upright position of the main body 206 corresponds to a position where a longitudinal axis of the main body 206 is substantially vertical. The USB-C interface of the charger 201 and the corresponding USB-C connector on the main body 206 are engaged so that the battery in the main body can be charged. In particular, power from an external power source (not shown) may be delivered to the main body 206 via the cable 212 and the USB-C interface. A consumable 210 is shown as engaged with the main body 206. An additional three consumables 210 are provided, each of which is held in a respective second holder 208 in the upright position. As can be seen in Figure 2, the end portion of the consumable 210 that is received in the second holder 208 corresponds to a portion of the consumable 210 that is arranged to engage the main body 206. The upright position of the consumables 210 illustrated in Figure 2 may prevent e-liquid from leaking out of the consumables 210.

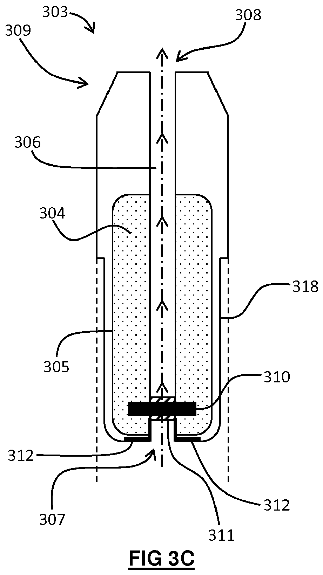

Figures 3A and 3B illustrate a smoking substitute system in the form of an e-cigarette system 301. The system may, for example, be used with charger 100 or charger 201 described above. For example, the system 301 may correspond to smoking substitute system 202 shown in Figure 2. The system 301 comprises an e-cigarette device defining a main body 302 of the system 301, and an e-cigarette consumable (or "pod") 303. In the illustrated embodiment the consumable 303 is removable from the main body (e-cigarette device), so as to be a replaceable component of the system 301. In other words, the e-cigarette system 301 is a closed system. A cross-sectional view of the consumable 303 is shown in Figure 3C.

As is apparent from Figures 3A and 3B, the consumable 303 is configured to engage the main body 302. The main body 302 includes an engagement portion 317, which is in the form of a cavity disposed at a first end of the main body 302. The engagement portion 317 of the main body 302 is arranged to engage an engagement portion 318 on the consumable 303. Figure 3A shows the main body 302 and the consumable 303 in an engaged state, whilst Figure 3B shows the main body 302 and the consumable 303 in a disengaged state. When engaged, the engagement portion 318 of the consumable 303 is received in the cavity of the engagement portion 317 of the main body 302, and is retained in the engaged position by way of a snap-engagement mechanism. In other embodiments, the main body 302 and consumable 303 may be engaged by screwing one into (or onto) the other, through a bayonet fitting, or by way of an interference fit.

The system 301 is configured to vaporise an aerosol-former, which in the illustrated embodiment, is in the form of a nicotine-based e-liquid 304. The e-liquid 304 comprises nicotine and a base liquid including propylene glycol and/or vegetable glycerine. The e-liquid 304 may also comprise a flavourant, for producing a flavoured aerosol.

As is more apparent from Figure 3C, the e-liquid 304 is stored within a reservoir in the form of a tank 305 that forms part of the consumable 303. In the illustrated embodiment, the consumable 303 is a "single-use" consumable 303. That is, upon exhausting the e-liquid 304 in the tank 305, the intention is that the user disposes of the entire consumable 303. In other embodiments, the e-liquid (i.e. aerosol former) may be the only part of the system that is truly "single-use". That is, the tank may be refillable with e-liquid or the e-liquid may be stored in a non-consumable component of the system. For example, the e-liquid may be stored in a tank located in the main body or stored in another component that is itself not single-use (e.g. a refillable cartomizer).

The tank 305 surrounds, and thus defines a portion of, a passage 306 that extends between an inlet 307 and an outlet 308 at opposing ends of the consumable 303. In this respect, the passage comprises an upstream end at the end of the consumable 303 that engages with the main body 302, and a downstream end at an opposing end of the consumable 303 that comprises a mouthpiece 309 of the system 301. When the consumable 303 is engaged with the main body 302, a user can inhale (i.e. take a puff) via the mouthpiece 309 so as to draw air through the passage 306, and so as to form an airflow (indicated by arrows) in a direction from the inlet 307 to the outlet 308 of the passage 306. Although not illustrated, the passage 306 may be partially defined by a tube (e.g. a metal tube) extending through the consumable 303. The passage 306 is in fluid communication with a gap defined between the consumable 303 and the main body 302 (when engaged) such that air outside of the system 301 is drawn into the passage 306 (during an inhale).

The smoking substitute system 301 is configured to vaporise the e-liquid 304 for inhalation by a user. To provide this, the consumable 303 comprises a heater having of a porous wick 310 and a resistive heating element in the form of a heating filament 311 that is helically wound around a portion of the porous wick 310. The porous wick 310 extends across the passage 306 (i.e. transverse to a longitudinal axis of the passage306) and opposing ends of the wick 310 extend into the tank 305 (so as to be submerged in the e-liquid 304). In this way, e-liquid 304 contained in the tank 305 is conveyed from the opposing ends of the porous wick 310 to a central portion of the porous wick 310 so as to be exposed to the airflow in the passage 306 (i.e. caused by a user inhaling).

The helical filament 311 is wound about this exposed central portion of the porous wick 310 and is electrically connected to an electrical interface in the form of electrical contacts 312 mounted at the end of the consumable that is proximate the main body 302 (when engaged). When the consumable 303 is engaged with the main body 302, the electrical contacts 312 contact corresponding electrical contacts (not shown) of the main body 302. The main body electrical contacts are electrically connected to a power source (not shown) of the main body 302, such that (in the engaged position) the filament 311 is electrically connected to the power source. In this way, power can be supplied by the main body 302 to the filament 311 in order to heat the filament 311. This heat is transferred from the filament 311 to the porous wick 310 which causes e-liquid 304 conveyed by the porous wick 310 to increase in temperature to a point at which it vaporises. The vaporised e-liquid becomes entrained in the airflow and, between the vaporisation point at the filament 311 and the outlet 308 of the passage 306, condenses to form an aerosol. This aerosol is then inhaled, via the mouthpiece 309, by a user of the system 301.

The power source of the main body 302 may be in the form of a battery (e.g. a rechargeable battery). The main body 302 comprises a connector (not shown) in the form of e.g. a USB or USB-C port for recharging the battery. The connector is disposed on an end face 320 of the main body 302, which is at second end of the main body 302, opposite the first end comprising the engagement portion 317. The connector is arranged to engage a corresponding connection interface (e.g. connection interface 114 discussed above) in a charger to recharge the battery.

The main body 302 may also comprise a controller that controls the supply of power from the power source to the main body electrical contacts (and thus to the filament 311). That, is the controller may be configured to control a voltage applied across the main body electrical contacts, and thus the voltage applied across the filament 311. In this way, the filament 311 may only be heated under certain conditions (e.g. during a puff and/or only when the system is in an active state). In this respect, the main body 302 may include a puff sensor (not shown) that is configured to detect a puff (i.e. inhalation). The puff sensor may be operatively connected to the controller so as to be able to provide a signal, to the controller, which is indicative of a puff state (i.e. puffing or not puffing). The puff sensor may, for example, be in the form of a pressure sensor or an acoustic sensor.

Although not shown, the main body 302 and consumable 303 may comprise a further interface which may, for example, be in the form of an RFID reader, a barcode or QR code reader. This interface may be able to identify a characteristic (e.g. a type) of a consumable 103 engaged with the main body 302. In this respect, the consumable 303 may include any one or more of an RFID chip, a barcode or QR code, or memory within which is an identifier and which can be interrogated via the interface.

An end portion 322 of the main body 302, which includes the end face 320 with the connector, is shaped so that it is receivable in a first holder of a charger (e.g. first holder 106 of charger 100). In particular, a cross-sectional shape of the end portion 322 of the main body 302 may correspond to a shape of the first holder, so that an interference fit may be formed when the main body 302 is inserted into the first holder. Moreover, the connector on the end face 320 is arranged to engage a corresponding connection interface (e.g. connection interface 114) disposed in the first holder when the end portion 322 is received in the first holder. In this manner, when the end portion 322 of the main body 302 is received in the first holder of a charger, the main body 302 may be connected to the charger via the connector on its end face 320, so that the battery in the main body 302 may be recharged.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A charger for a smoking substitute system, the charger comprising:
a base having a first holder for receiving a main body of the smoking substitute system, and one or more second holders, each of the one or more second holders being arranged to receive a respective consumable for the smoking substitute system; and
a charging assembly for charging the main body, the charging assembly including a connection interface arranged for connection to the main body when the main body is received in the first holder.

2. A charger according to claim 1, wherein the first holder is arranged to hold the main body of the smoking substitute system in an upright position.

3. A charger according to claim 1 or 2, wherein the first holder is arranged to receive an end portion of the main body of the smoking substitute device.

4. A charger according to claim 3, wherein the connection interface is disposed in the first holder, and arranged for connection to the main body when the end portion of the main body is received in the first holder.

5. A charger according to claim 4, wherein a shape of the first holder substantially matches a cross-sectional shape of the end portion of the main body of the smoking substitute system.

6. A charger according to any preceding claim, wherein each of the one or more second holders is arranged to hold the respective consumable in an upright position.

7. A charger according to any preceding claim, wherein the first holder is formed as a recess in the base.

8. A charger according to any preceding claim, wherein each of the one or more second holders is formed as a respective recess in the base.

9. A charger according to any preceding claim, wherein each of the one or more second holders has a shape that substantially matches a cross-sectional shape of the respective consumable.

10. A charger according to any preceding claim, further including a cable for connecting the charging assembly to an external power source.

11. A charger according to claim 10, wherein a portion of the cable is covered by the base.

12. A charger according to any preceding claim, further including a charge indicator for indicating a charging status of a main body received in the first holder.

13. A smoking substitute kit including:
a charger according to any preceding claim; and
a smoking substitute system comprising a main body and a consumable, the consumable being engageable with the main body;
wherein the first holder is arranged to receive the main body such that, when the main body is received in the first holder it is connected to the connection interface for charging; and
wherein the consumable is receivable in each of the one or more second holders.

14. A smoking substitute kit according to claim 13, wherein each of the one or more second holders has a shape that is complementary to a shape of the consumable.

15. A smoking substitute kit according to claim 13 or 14, wherein each of the one or more second holders is arranged to hold the consumable in an upright position when the consumable is received therein.
